# EUROPEAN PATENT APPLICATION

(11) **EP 4 810 208 A1**
(43) Date of publication of application: **23.09.2026**
(21) Application number: 26166549.1
(22) Date of filing: 20.03.2026
(51) Int. Cl.: B25J 9/16, B25J 15/06

(54) **SYSTEMS AND METHODS FOR ADAPTIVE ROBOTIC BEHAVIOR BASED ON SURFACE FEATURE RECOGNITION**

(30) Priority: 21.03.2025 US 202563775935 P
(71) Applicant: Plus One Robotics, Inc., San Antonio, TX 78226 (US)
(72) Inventor: Suay, H. Bener, San Antonio, 78226 (US); Grollmann, Daniel H., San Antonio, 78226 (US); Majumdar, Abhijit, San Antonio, 78226 (US); Bhatu, Krishna, San Antonio, 78226 (US); Bailey, James, San Antonio, 78226 (US)
(74) Representative: Fuchs Patentanwälte Partnerschaft mbB

(57) **Abstract**

A robotic picking system comprises an imaging device, an image processor, and a pick planning processor. The imaging device captures visual data of objects in a pick area. The image processor analyzes the visual data to generate a classification map distinguishing between general surface regions and designated feature regions of the objects. The pick planning processor receives the classification map and executes an optimization algorithm that assigns weighted values to different surface regions, wherein designated feature regions are assigned penalty values. The processor determines picking parameters including object selection, end effector positioning, and end effector activation configuration based on minimizing a cost function that incorporates the weighted values. The system enables automated object manipulation while reducing interaction with designated surface features through mathematical optimization of picking strategies.

## Description

### CROSS-REFERENCE TO RELATED APPLICATIONS

This application claims the benefit of U.S. Provisional Application 63/775,935, filed March 21, 2025, titled "SYSTEMS AND METHODS FOR ADAPTIVE ROBOTIC BEHAVIOR BASED ON SURFACE FEATURE RECOGNITION". The contents of the above identified applications are incorporated herein by reference in their entirety.

### BACKGROUND

### Field of the Art

The present disclosure is related to the field of computer vision-guided robotic manipulation systems, and more particularly to automated warehouse picking systems that employ image processing and optimization algorithms to selectively grasp objects while reducing contact with surface features.

### Discussion of the State of the Art

In automated warehouse logistics, robotic picking systems handle millions of packages daily, transferring items between containers, conveyor belts, and sorting stations. These systems typically employ suction-based end effectors that use vacuum pressure to grasp and lift packages from above. During normal operation, these end effectors frequently contact shipping labels affixed to package surfaces. The vacuum suction force applied during grasping operations can cause labels to peel away from packages, tear, or become otherwise damaged. This label damage results in operational disruptions throughout the logistics chain, including loss of package tracking information, inability to scan barcodes at subsequent processing stations, misrouted deliveries to incorrect destinations, delays in package processing, and customer dissatisfaction due to missing or delayed shipments.

Current robotic picking systems lack mechanisms to coordinate multiple aspects of the picking operation in a manner that accounts for the presence and location of surface features such as shipping labels. These systems do not integrate object selection decisions, end effector positioning calculations, and selective suction cup activation patterns into a unified operational framework. Existing approaches treat surface features as binary constraints-either completely avoiding any contact with labels or ignoring their presence entirely. This binary treatment limits operational efficiency when complete avoidance of surface features is not geometrically feasible given the package configuration, surrounding packages, or container constraints.

Various approaches have been developed to address label damage in robotic picking operations. Some systems employ traditional machine learning models that require separate training and annotation processes for object detection and label detection. These systems first identify objects in the workspace, then separately identify labels, and subsequently perform an association step to determine which labels belong to which objects. This multi-stage approach introduces computational overhead and creates multiple points where errors can propagate through the system.

Other systems utilize barcode scanning technology to identify label locations before instructing robotic arms on appropriate grasping positions. These barcode-based systems encounter failures when shipping label formats change, such as transitions from one-dimensional barcodes to two-dimensional matrix codes or QR codes. Each format change requires re-engineering of the scanning algorithms and potentially hardware modifications, resulting in system downtime and implementation costs.

High-resolution camera systems have been deployed to locate and identify barcodes with greater precision. While these systems can detect smaller features and read barcodes from greater distances, they increase overall system cost and computational requirements. The higher resolution imaging does not inherently prevent label damage, as the fundamental issue of suction force affecting labels remains unaddressed.

Mechanical approaches have focused on adhesive modifications, employing stronger adhesives to prevent label removal during suction-based picking. However, stronger adhesives create complications in recycling operations where labels must be removed from packages. Additionally, adhesive strength varies with environmental conditions such as temperature and humidity, making this approach unreliable across different warehouse environments.

Alternative end effector designs have been proposed, including pincer-style grippers and side-grasping mechanisms that avoid top surface contact entirely. These mechanical alternatives sacrifice the operational advantages of suction-based systems, which can quickly grasp packages of varying sizes and shapes from above without precise alignment. Side-grasping mechanisms require additional clearance around packages and cannot operate efficiently in densely packed containers where packages are positioned with minimal spacing.

None of the existing solutions provide a computational framework that jointly optimizes the interrelated decisions of object selection, end effector positioning, and selective suction cup activation patterns. Current systems do not treat surface features as soft constraints with adjustable penalty values that can be tuned based on operational priorities. The lack of such a unified framework prevents existing systems from making optimal trade-offs between picking success rates, operational speed, and label preservation when complete avoidance of surface features is not achievable within the geometric constraints of the picking scenario.

### SUMMARY

The present invention provides a computer-controlled robotic picking system that employs cameras and image processing hardware to identify objects and their surface features in warehouse environments. The system captures images of a pick area and processes them through image processing circuitry to generate pixel maps that classify pixels as belonging to either safe-to-contact regions or surface feature regions. These pixel maps are provided to a pick planning processor that computes picking strategies.

The system addresses limitations of conventional robotic picking systems that either ignore surface features entirely or treat them as absolute constraints. Previous approaches that ignore surface features risk damaging shipping labels or other markings, disrupting package tracking and delivery operations. Approaches that treat surface features as hard constraints often fail to pick objects when surface features occupy substantial portions of graspable surfaces.

The invention implements a hardware-software architecture comprising a data acquisition system, an image processing module, and a pick planning module. The data acquisition system captures 2D and/or 3D image data of the pick area using sensors such as RGB-D cameras, LiDAR, or infrared cameras. The image processing module processes this data to generate dual pixel maps: a first pixel map with labels identifying object surface regions acceptable for end effector contact, and a second pixel map with labels identifying surface features to be protected such as shipping labels, other packaging labels, holes, perforations, and the like. The second pixel map comprises a subset of pixels from the first pixel map, creating a secondary classification layer.

The pick planning module receives these pixel maps and evaluates pixels associated with features to be protected using tunable penalty costs rather than hard collision constraints. This enables a single optimization computation that jointly determines: (1) which object to pick from multiple objects, (2) the pose for the end effector relative to the selected object, and (3) an activation configuration for independently controllable portions of the end effector. The activation configuration includes decreased activation of end effector portions whose contact regions would overlap surface features to be protected. The system outputs control instructions including pick coordinates, robot pose, end effector pose, and end effector activation commands.

The technical advantages include reduced computational latency compared to multi-stage sequential planning approaches due to the single-optimization architecture. The tunable penalty cost approach allows operators to adjust the system's behavior based on operational priorities, enabling deployment across different warehouse environments. The system can apply variable penalties based on geometric characteristics of surface features, such as applying higher penalties to edge pixels where label damage is more likely. The architecture supports learning-based refinement where stored rankings of activation patterns can be updated based on outcomes of executed picks. The pixel map fusion capability allows combining multiple feature maps into unified representations for processing. The system extends beyond shipping labels to protect other surface features such as perforations, holes, seams, and packaging labels.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
**FIG. 1** illustrates a network architecture for a surface feature protection system in accordance with an exemplary embodiment of the invention.
**FIG. 2** illustrates a system architecture for a surface feature protection system in accordance with an exemplary embodiment of the present invention.
**FIG. 3** illustrates an exemplary computer implemented process for a surface feature protection system according to one embodiment of the invention.
**FIG. 4** illustrates one embodiment of the computing architecture that supports an embodiment of the inventive disclosure.
**FIG. 5** illustrates components of a system architecture that supports an embodiment of the inventive disclosure.
**FIG. 6** illustrates components of a computing device that supports an embodiment of the inventive disclosure.
**FIG. 7** illustrates components of a computing device that supports an embodiment of the inventive disclosure.

### DETAILED DESCRIPTION

One or more different embodiments may be described in the present application. Further, for one or more of the embodiments described herein, numerous alternative arrangements may be described; it should be appreciated that these are presented for illustrative purposes only and are not limiting of the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural, logical, software, electrical and other changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more of the aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements.

Headings of sections provided in this patent application and the title of this patent application are for convenience only and are not to be taken as limiting the disclosure in any way.

Devices that are in communication with each other need not be in continuous communication with each other, unless expressly specified otherwise. In addition, devices that are in communication with each other may communicate directly or indirectly through one or more communication means or intermediaries, logical or physical.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

The detailed description set forth herein in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

### Network Architecture

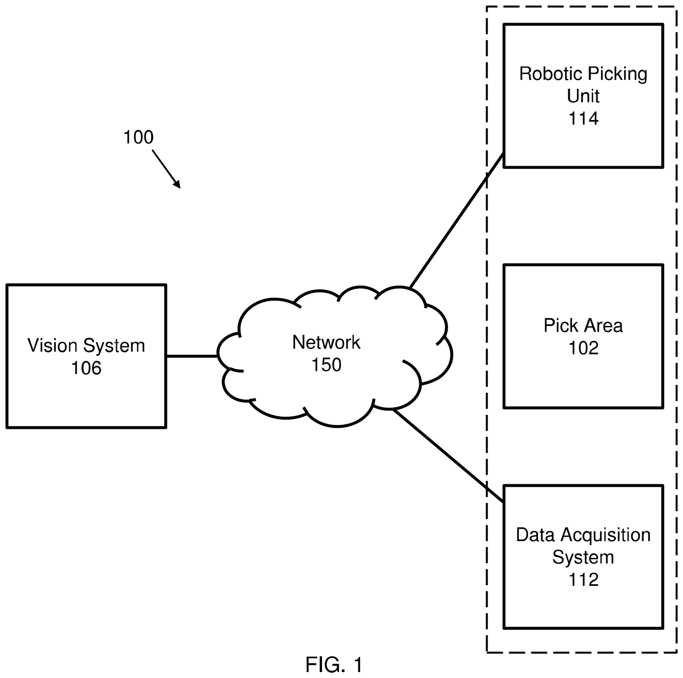

**FIG. 1** illustrates a network architecture for a surface feature protection system 100 for robotic picking operations in accordance with an exemplary embodiment. The system comprises: pick area 102; data acquisition system 112 configured to capture image data of the pick area; vision system 106; robotic picking unit 114 comprising a robotic arm; and network 150. The various components described herein are exemplary and for illustration purposes only and any combination or subcombination of the various components may be used as would be apparent to one of ordinary skill in the art. The system may be reorganized or consolidated, as understood by a person of ordinary skill in the art, to perform the same tasks on one or more other servers or computing devices without departing from the scope of the invention.

At a high level 102 represents a pick area that serves as the physical environment where a plurality of objects are positioned for picking operations. The pick area 102 provides the spatial domain within which automated or semi-automated picking systems operate to retrieve objects for order fulfillment, packaging, or distribution purposes.

The pick area 102 functions as a storage and staging environment where objects await retrieval by picking mechanisms. Objects positioned within the pick area 102 may possess various surface features including shipping labels, perforations, holes, seams, or packaging labels that require preservation during the picking process. The pick area 102 maintains objects in accessible configurations to facilitate efficient picking operations while enabling monitoring of object positions and conditions.

The pick area 102 operates by providing structured or semi-structured storage locations where objects can be placed and subsequently accessed by picking systems. The physical configuration of the pick area 102 allows for systematic placement of objects while maintaining accessibility for picking operations. The pick area 102 interfaces with a data acquisition system that captures current state information about the objects and their positions within the area. This state information includes object locations, orientations, and surface feature positions that inform subsequent picking operations. The pick area 102 maintains objects in configurations that expose them for visual or sensor-based detection while protecting surface features from damage during storage and retrieval.

Alternative implementations of the pick area 102 include automated storage and retrieval systems (AS/RS) with movable storage units that present objects to picking stations. The pick area 102 may alternatively comprise mobile robot accessible floor spaces where objects are placed in predetermined zones. Another alternative involves vertical lift modules where trays containing objects are automatically presented at ergonomic heights for picking. The pick area 102 may also be implemented as a goods-to-person system where storage units are transported to picking stations rather than maintaining static storage locations. Additionally, the pick area 102 may consist of overhead conveyor systems where objects are suspended and transported to picking positions, or dynamic shelving systems that automatically adjust shelf positions based on picking requirements.

At a high level data acquisition system 112 comprises one or more image capture devices positioned to obtain visual and spatial data from a pick area within a material handling environment. The data acquisition system 112 functions as the primary sensory input mechanism for gathering comprehensive information about objects, their positions, orientations, and physical characteristics within the designated workspace.

The data acquisition system 112 operates to capture multidimensional data representing objects and their surrounding environment within the pick area. The system 112 obtains both color information in the form of RGB data and depth information to create a detailed representation of the three-dimensional space and the objects contained therein. This dual-mode data capture enables the system 112 to provide rich visual and spatial information that facilitates subsequent processing and analysis operations. The captured data encompasses surface textures, color variations, object boundaries, spatial relationships between objects, and distance measurements from the capture devices to various points within the scene.

The data acquisition system 112 works by employing one or more image capture devices that utilize various sensing technologies to gather visual and spatial information. When configured with 2D cameras, the system 112 captures traditional color images that provide RGB pixel data representing the visual appearance of objects. When utilizing 3D cameras or RGB-D cameras, the system 112 simultaneously captures color information and depth measurements for each pixel, creating a point cloud representation of the scene. LiDAR sensors within the system 112 emit laser pulses and measure return times to generate precise distance measurements and three-dimensional mappings. Infrared cameras capture thermal signatures and can operate in low-light conditions, while ultrasonic sensors emit sound waves and measure echo return times to determine object distances. The system 112 transmits the captured image data, whether in the form of 2D images, 3D point clouds, depth maps, or sensor readings, to downstream vision systems for processing and pixel-level classification.

Alternative implementations of the data acquisition system 112 include time-of-flight cameras that measure the phase shift of emitted light to determine depth information. Structured light systems project known patterns onto the scene and analyze deformations to calculate depth. Stereoscopic camera pairs capture images from slightly different viewpoints to enable depth calculation through triangulation. Photogrammetry systems capture multiple 2D images from various angles to reconstruct 3D models. Radar-based sensors emit electromagnetic waves to detect objects and measure distances. Millimeter wave sensors operate at high frequencies to provide precise distance measurements. Multi-spectral or hyperspectral cameras capture data across multiple wavelength bands beyond visible light. Event-based cameras detect changes in pixel brightness rather than capturing full frames at fixed intervals. Light field cameras capture both intensity and directional information about light rays. Polarization cameras detect the polarization state of reflected light to enhance surface detail detection.

At a high level 106 is a vision system comprising a computing system that receives and processes image data to facilitate robotic picking operations. The vision system 106 integrates image processing capabilities with pick planning functionality to enable automated object manipulation while protecting designated surface features.

The vision system 106 receives image data from the data acquisition system and processes this data to determine object features, surface feature locations, and pick interaction data. The system 106 performs multiple functions including analyzing incoming image data to identify and classify different regions within the captured images, detecting and mapping the locations of surface features that require protection during picking operations, and generating data related to pick interactions. The vision system 106 comprises an image processing module and a pick planning module that operate in conjunction to process the received image data and generate actionable output for controlling robotic operations.

The vision system 106 operates by first receiving image data through its interface with the data acquisition system. The image processing module within the vision system 106 analyzes the received image data to generate pixel maps that classify different regions of the captured images, distinguishing between object regions and surface features to be protected. These pixel maps provide a detailed spatial representation of the objects and their associated surface features. The pick planning module within the vision system 106 utilizes the pixel maps and classification data from the image processing module to compute optimized pick plans. These pick plans determine the appropriate locations, orientations, and sequences for robotic picking operations while avoiding damage to surface features to be protected. The vision system 106 then outputs control instructions based on the computed pick plans to the robotic picking unit, enabling the execution of the planned picking operations.

Alternative implementations of the vision system 106 include a distributed computing architecture where the image processing module and pick planning module operate on separate computing devices connected through a network interface. The vision system 106 can alternatively employ cloud-based processing where image data is transmitted to remote servers for processing and pick plan computation. Another alternative configuration involves the vision system 106 utilizing edge computing devices positioned proximate to the data acquisition system to perform preliminary image processing before transmitting processed data to a central computing system. The vision system 106 can alternatively incorporate machine learning processors or neural network accelerators specifically designed for image processing and pattern recognition tasks. Alternative architectures include implementing the vision system 106 as a modular system where different processing modules can be added or removed based on specific application requirements, or as an integrated circuit or system-on-chip solution that combines image processing and pick planning functions within a single hardware component.

In one aspect, vision system 106 may comprise user device(s) which include, generally, a computer or computing device including functionality for communicating (e.g., remotely) over a network 150. Data may be collected from user devices, and data requests may be initiated from each user device. User device(s) may be a server, a desktop computer, a laptop computer, personal digital assistant (PDA), an in- or out-of-car navigation system, a smart phone or other cellular or mobile phone, or mobile gaming device, among other suitable computing devices. User devices may execute one or more applications, such as a web browser (e.g., Microsoft Windows Internet Explorer, Mozilla Firefox, Apple Safari, Google Chrome, and Opera, etc.), or a dedicated application to submit user data, or to make prediction queries over a network 150.

In particular embodiments, each user device may be an electronic device including hardware, software, or embedded logic components or a combination of two or more such components and capable of carrying out the appropriate functions implemented or supported by the user device. For example and without limitation, a user device may be a desktop computer system, a notebook computer system, a netbook computer system, a handheld electronic device, or a mobile telephone. The present disclosure contemplates any user device. A user device may enable a network user at the user device to access network 150. A user device may enable its user to communicate with other users at other user devices.

A user device may have a web browser, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user device may enable a user to enter a Uniform Resource Locator (URL) or other address directing the web browser to a server, and the web browser may generate a Hyper Text Transfer Protocol (HTTP) request and communicate the HTTP request to server. The server may accept the HTTP request and communicate to the user device one or more Hyper Text Markup Language (HTML) files responsive to the HTTP request. The user device may render a web page based on the HTML files from server for presentation to the user. The present disclosure contemplates any suitable web page files. As an example and not by way of limitation, web pages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a web page encompasses one or more corresponding web page files (which a browser may use to render the web page) and vice versa, where appropriate.

The user device may also include an application that is loaded onto the user device. The application obtains data from the network 150 and displays it to the user within the application interface.

Exemplary user devices are illustrated in some of the subsequent figures provided herein. This disclosure contemplates any suitable number of user devices, including computing systems taking any suitable physical form. As example and not by way of limitation, computing systems may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, or a combination of two or more of these. Where appropriate, the computing system may include one or more computer systems; be unitary or distributed; span multiple locations; span multiple machines; or reside in a cloud, which may include one or more cloud components in one or more networks. Where appropriate, one or more computing systems may perform without substantial spatial or temporal limitation one or more steps of one or more methods described or illustrated herein. As an example, and not by way of limitation, one or more computing systems may perform in real time or in batch mode one or more steps of one or more methods described or illustrated herein. One or more computing system may perform at different times or at different locations one or more steps of one or more methods described or illustrated herein, where appropriate.

At a high level 114 comprises a robotic manipulation system configured to execute automated picking operations within a designated workspace. The robotic picking unit 114 includes at least one robotic arm having multiple joints and degrees of freedom, enabling movement throughout a three-dimensional picking area. The unit 114 incorporates an end effector mounted to the distal end of the robotic arm, where the end effector includes multiple independently controllable portions such as discrete suction chambers that can be selectively activated or deactivated.

The robotic picking unit 114 performs automated retrieval of objects from within the pick area based on instructions received from an associated vision system. Upon receiving control instructions, the unit 114 positions the robotic arm and end effector according to specified pick coordinates and pose configurations. The unit 114 then activates selected portions of the end effector as indicated by the end effector activation configuration to engage and retrieve target objects. The multi-jointed structure of the robotic arm enables the unit 114 to access objects at various heights, depths, and angular orientations within the workspace.

The robotic picking unit 114 operates by processing control instructions that include pick coordinates defining the target location, robot pose parameters specifying the configuration of the robotic arm joints, end effector pose data determining the orientation of the end effector relative to the target object, and end effector activation configurations indicating which portions of the end effector should be engaged. The unit 114 translates these instructions into coordinated movements of the robotic arm joints and selective activation of the end effector portions to execute the picking operation. The independent control of multiple end effector portions allows the unit 114 to adapt to different object geometries and picking scenarios.

Alternative configurations for the robotic picking unit 114 include implementations with multiple robotic arms operating in coordination, robotic arms with different kinematic configurations, or robotic arms with varying numbers of degrees of freedom. The end effector portions may comprise vacuum grippers, mechanical fingers, electromagnetic grippers, and/or adhesive-based gripping elements. The control instructions may be received through various communication protocols including Ethernet, fieldbus systems, or wireless communication interfaces. The robotic arm may incorporate different actuation technologies such as electric servo motors, pneumatic actuators, or hydraulic drives. The end effector may include alternative numbers of independently controllable portions ranging from two to dozens of discrete gripping zones.

At a high level 150 comprises a communication infrastructure that facilitates data exchange between multiple system components including a data acquisition system, vision system, and robotic picking unit. The network 150 enables the transmission of sensor data, processed information, and control signals between these interconnected components to coordinate automated operations.

The network 150 functions to provide bidirectional data pathways that support the flow of information required for system operation. The network 150 receives image data and sensor information from the data acquisition system 112 and routes this data to the vision system 106 for processing. Upon completion of image analysis and object recognition tasks, the vision system 106 transmits control instructions through the network 150 to the robotic picking unit 114. These control instructions may include position coordinates, gripper configurations, movement trajectories, and timing parameters. The network 150 handles data packet routing, protocol conversion, and synchronization to maintain temporal coordination between sensing, processing, and actuation operations.

The network 150 operates by establishing communication channels between connected devices using standardized protocols and physical media. For wired implementations, the network 150 utilizes physical cables and connectors to create electrical or optical pathways for data transmission. Data packets are formatted according to the selected protocol, transmitted through the physical medium, and decoded at the receiving device. For wireless implementations, the network 150 employs radio frequency transceivers to modulate data onto electromagnetic carrier waves, which are transmitted through free space and demodulated at the receiving device. The network 150 implements error detection, correction mechanisms, and quality of service parameters to maintain reliable data delivery within specified latency constraints.

Network cloud 150 generally represents a network or collection of networks (such as the Internet or a corporate intranet, or a combination of both) over which the various components illustrated in **FIG. 1** (including other components that may be necessary to execute the system described herein, as would be readily understood to a person of ordinary skill in the art). In particular embodiments, network 150 is an intranet, an extranet, a virtual private network (VPN), a local area network (LAN), a wireless LAN (WLAN), a wide area network (WAN), a metropolitan area network (MAN), a portion of the Internet, or another network 150 or a combination of two or more such networks 150. One or more links connect the systems and databases described herein to the network 150. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable network 150, and any suitable link for connecting the various systems and databases described herein.

The network 150 connects the various systems and computing devices described or referenced herein. In particular embodiments, network 150 is an intranet, an extranet, a virtual private network (VPN), a local area network (LAN), a wireless LAN (WLAN), a wide area network (WAN), a metropolitan area network (MAN), a portion of the Internet, or another network 421 or a combination of two or more such networks 150. The present disclosure contemplates any suitable network 150.

One or more links couple one or more systems, engines or devices to the network 150. In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable links coupling one or more systems, engines or devices to the network 150.

In particular embodiments, each system or engine may be a unitary server or may be a distributed server spanning multiple computers or multiple datacenters. Systems, engines, or modules may be of various types, such as, for example and without limitation, web server, news server, mail server, message server, advertising server, file server, application server, exchange server, database server, or proxy server. In particular embodiments, each system, engine or module may include hardware, software, or embedded logic components or a combination of two or more such components for carrying out the appropriate functionalities implemented or supported by their respective servers. For example, a web server is generally capable of hosting websites containing web pages or particular elements of web pages. More specifically, a web server may host HTML files or other file types, or may dynamically create or constitute files upon a request, and communicate them to client/user devices or other devices in response to HTTP or other requests from client devices or other devices. A mail server is generally capable of providing electronic mail services to various client devices or other devices. A database server is generally capable of providing an interface for managing data stored in one or more data stores.

In particular embodiments, one or more data storages may be communicatively linked to one or more servers via one or more links. In particular embodiments, data storages may be used to store various types of information. In particular embodiments, the information stored in data storages may be organized according to specific data structures. In particular embodiments, each data storage may be a relational database. Particular embodiments may provide interfaces that enable servers or clients to manage, e.g., retrieve, modify, add, or delete, the information stored in data storage.

The system may also contain other subsystems and databases, which are not illustrated in **FIG. 1**, but would be readily apparent to a person of ordinary skill in the art. For example, the system may include databases for storing data, storing features, storing outcomes (training sets), and storing models. Other databases and systems may be added or subtracted, as would be readily understood by a person of ordinary skill in the art, without departing from the scope of the invention.

### System Architecture

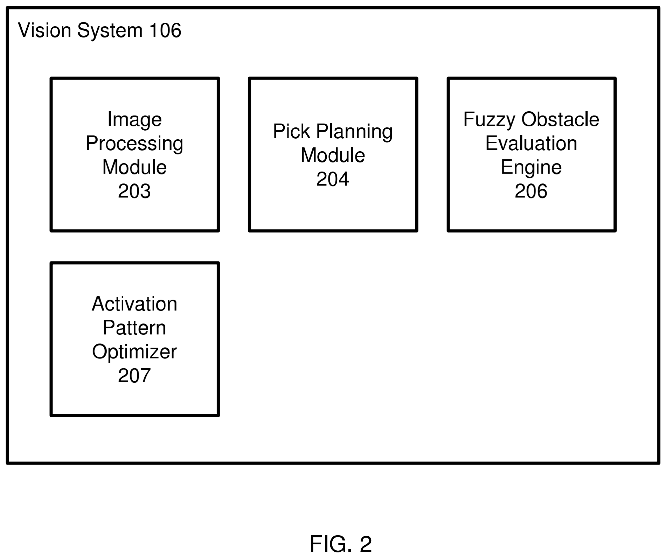

**FIG. 2** illustrates an exemplary embodiment of the vision system 106. The vision system 106 comprises: image processing module 203; pick planning module 204; fuzzy obstacle evaluation engine 206; and activation pattern optimizer 207. The various components described herein are exemplary and for illustration purposes only and any combination or subcombination of the various components may be used as would be apparent to one of ordinary skill in the art. Other systems, interfaces, modules, engines, databases, and the like, may be used, as would be readily understood by a person of ordinary skill in the art, without departing from the scope of the invention. Any system, interface, module, engine, database, and the like may be divided into a plurality of such elements for achieving the same function without departing from the scope of the invention. Any system, interface, module, engine, database, and the like may be combined or consolidated into fewer of such elements for achieving the same function without departing from the scope of the invention. All functions of the components discussed herein may be initiated manually or may be automatically initiated when the criteria necessary to trigger action have been met.

At a high level, image processing module 203 comprises a computational subsystem configured to transform raw image data into structured pixel-based representations suitable for downstream robotic control applications. The image processing module 203 interfaces with upstream data acquisition components to receive image data streams and generates dual-layer pixel maps that encode spatial information about permissible contact regions and surface features to be protected.

The image processing module 203 may perform multi-stage image analysis operations on received image data. Upon receiving raw image data from the data acquisition system, the image processing module 203 applies preprocessing operations that may include noise reduction, contrast enhancement, and geometric correction. The image processing module 203 may generate a first pixel map wherein each pixel location is assigned a first label indicating whether the corresponding object surface region is acceptable for end effector contact. This first pixel map provides a binary or multi-class classification across the entire image space, delineating zones where robotic interaction is permissible. The image processing module 203 may generate a second pixel map that provides additional classification information for a subset of the pixels in the first pixel map. The second pixel map may assign second labels to pixels corresponding to surface features to be protected during robotic operations. This dual-map architecture enables the image processing module 203 to maintain both broad regional classifications and fine-grained feature-specific annotations within a unified spatial reference frame. The second pixel map may encompass all pixels from the first map or may selectively target regions of interest, thereby creating a secondary classification layer that augments the primary contact-permissibility information.

The image processing module 203 may perform pixel-level classification of input image data to identify and delineate different regions within the images. Specifically, the image processing module 203 may analyze each pixel in an input image and assign it to multiple predefined categories. In one embodiment, the image processing module 203 distinguishes between pixels that correspond to pickable objects (or pickable surfaces of objects) and pixels that correspond to surface features to be protected such as shipping labels, barcodes, or printed text. The output of the image processing module 203 may comprise a segmentation map wherein each pixel location contains a classification label indicating its category. This segmentation map may be utilized by downstream modules for further processing and decision-making.

The image processing module 203 may operate through the implementation of one or more trained machine learning models. In one embodiment, the image processing module 203 employs a convolutional neural network (CNN) architecture that has been trained on annotated image datasets. The CNN may comprise multiple convolutional layers, pooling layers, and upsampling layers arranged in an encoder-decoder configuration. During operation, input image data is fed through the encoder portion, which extracts features at multiple scales. The decoder portion then processes these features to generate pixel-wise predictions at the original image resolution. The training process involves optimizing the network parameters using labeled training data where each pixel has been manually or semi-automatically annotated with its corresponding category. The image processing module 203 may utilize various loss functions during training, such as cross-entropy loss or focal loss, to optimize classification accuracy across different categories.

Alternative implementations of the image processing module 203 may employ different machine learning architectures or techniques. In some embodiments, the image processing module 203 may utilize fully convolutional networks (FCNs), U-Net architectures, or transformer-based models for segmentation. The image processing module 203 may alternatively employ traditional computer vision techniques such as watershed algorithms, graph-based segmentation, or region growing methods combined with feature extraction and classification stages. In other embodiments, the image processing module 203 may implement ensemble methods that combine predictions from multiple models to improve segmentation accuracy. The image processing module 203 may also incorporate multi-scale processing, attention mechanisms, or conditional random fields (CRFs) for refinement of segmentation boundaries. Additionally, the image processing module 203 may be configured to operate on different input modalities, including RGB images, depth images, or multi-spectral data, depending on the available sensor configurations.

At a high level, pick planning module 204 comprises a computational module that processes pixel map data to generate optimized pick plans for robotic manipulation tasks. The module integrates multiple decision-making processes into a unified optimization framework, enabling simultaneous determination of object selection, end effector positioning, and activation control parameters.

The pick planning module 204 receives pixel maps as input data structures, which may contain spatial representations of objects and their surface features. These pixel maps may encode various attributes including object boundaries, surface feature locations, and regions designated as protected areas. The module processes this input through an optimization computation that generates a comprehensive pick plan as output.

The operation of pick planning module 204 involves treating pixels associated with surface features to be protected as fuzzy obstacles rather than rigid collision boundaries. This approach employs tunable penalty costs that can be adjusted based on the specific requirements of the picking operation. The penalty cost function allows the optimization to consider protected regions as soft constraints, where contact is discouraged but not absolutely prohibited. This fuzzy obstacle treatment enables the system to make trade-offs between pick success probability and surface feature protection.

The optimization computation performed by pick planning module 204 jointly determines three interrelated aspects of the pick plan. First, the module selects which object from the available set should be picked. Second, it computes an optimal pose for the end effector relative to the selected object, where the pose may include position and orientation parameters. Third, the module determines an activation configuration for the independently controllable portions of the end effector. This activation configuration may specify reduced activation levels for portions of the end effector whose contact regions would overlap with surface features to be protected identified in the pixel maps.

Alternative implementations of the pick planning module 204 may employ various optimization techniques. In one embodiment, the module may utilize gradient-based optimization methods to solve the joint optimization problem. Another embodiment may implement sampling-based approaches that evaluate multiple candidate pick plans and select the optimal solution based on a composite cost function. The module may alternatively employ machine learning techniques, such as neural networks trained on historical pick data, to predict optimal pick plans directly from pixel map inputs.

The fuzzy obstacle representation in pick planning module 204 may be implemented through various mathematical formulations. One approach involves Gaussian penalty functions centered on protected pixels, where the penalty magnitude decreases with distance from the protected region. Another implementation may use sigmoid functions to create smooth transitions between protected and unprotected areas. The tunable parameters of these penalty functions may be adjusted dynamically based on the type of surface feature or the specific requirements of the picking task. Additional details of the fuzzy obstacle evaluation used by the pick planning module 204 are discussed below with respect to fuzzy obstacle evaluation engine 206 which may comprise a separate component or may be embodied in the pick planning module 204.

The end effector activation configuration computed by pick planning module 204 may be represented in different formats. In one embodiment, the configuration may comprise a vector of activation values, where each element corresponds to an independently controllable portion of the end effector. Another representation may use a binary mask indicating which portions should be activated or deactivated. The module may also generate continuous activation profiles that specify varying levels of activation across the end effector surface. Additional details of the end effector activation determination used by the pick planning module 204 are discussed below with respect to activation pattern optimizer 207 which may comprise a separate component or may be embodied in the pick planning module 204.

At a high level, fuzzy obstacle evaluation engine 206 comprises a computational engine that processes pixel data corresponding to surface features to be protected within a pick evaluation framework. Although depicted as a separate component, fuzzy obstacle evaluation engine 206 may be incorporated into the pick planning module 204 without departing from the scope of the invention as would be apparent to one of ordinary skill in the art. The fuzzy obstacle evaluation engine 206 transforms traditional binary collision detection into a graduated penalty assessment system, enabling more sophisticated pick location optimization.

The fuzzy obstacle evaluation engine 206 functions to assign variable penalty costs to pixels associated with surface features to be protected rather than categorically excluding such pixels from consideration. The fuzzy obstacle evaluation engine 206 evaluates each pixel based on its spatial relationship to surface features and applies corresponding penalty values that reflect the relative risk of damage or interference. This approach enables the system to consider pick locations that may partially overlap with features to be protected when such locations offer substantially higher success probabilities.

The fuzzy obstacle evaluation engine 206 operates by first receiving pixel data that identifies surface features to be protected within the pick evaluation space. For each pixel associated with a protected feature, the fuzzy obstacle evaluation engine 206 determines geometric characteristics including the pixel's position relative to feature boundaries. Edge pixels, which represent locations where mechanical stress concentrations are more likely to occur during pick operations, are assigned higher penalty values. Interior pixels of features to be protected receive progressively lower penalties based on their distance from feature edges. The fuzzy obstacle evaluation engine 206 may employ distance transform algorithms to compute each pixel's proximity to the nearest feature boundary. These distance values are then mapped through penalty functions, which may be linear, exponential, or follow other mathematical relationships. The resulting penalty costs are integrated into the overall pick optimization framework, where they influence but do not absolutely constrain the selection of pick locations.

Alternative implementations of the fuzzy obstacle evaluation engine 206 may employ different approaches for penalty assignment and feature evaluation. One alternative utilizes machine learning models trained on historical pick data to predict damage probability for different pixel locations relative to surface features. Another alternative implements multi-resolution penalty maps where coarse-grained penalties are refined through iterative evaluation. Some embodiments may incorporate material property data to adjust penalties based on feature fragility or importance. The fuzzy obstacle evaluation engine 206 may alternatively employ probabilistic models that estimate collision likelihood based on gripper uncertainty and feature geometry. Other variations include implementing adaptive penalty functions that modify their parameters based on accumulated pick statistics or employing vector field representations where penalty gradients guide pick locations away from high-risk areas while maintaining computational efficiency.

At a high level, activation pattern optimizer 207 comprises an optimization engine that analyzes and selects activation configurations for multi-zone end effectors during pick operations involving sensitive surface regions. Although depicted as a separate component, activation pattern optimizer 207 may be incorporated into the pick planning module 204 without departing from the scope of the invention as would be apparent to one of ordinary skill in the art. The activation pattern optimizer 207 operates as a decision-making subsystem that balances competing objectives of successful object acquisition and protection of designated surface features.

The activation pattern optimizer 207 functions to determine which portions of a multi-zone end effector should be activated when the end effector's operational footprint intersects with protected surface areas. When an end effector approaches a target object and the system detects overlap between the end effector's influence zone and pixels designated as surface features to be protected, activation pattern optimizer 207 evaluates a plurality of candidate activation patterns. Each activation pattern represents a unique configuration of active and inactive zones within the end effector. The activation pattern optimizer 207 computes expected outcomes for each candidate pattern, considering factors such as gripping force distribution, contact area with the target object, and proximity to features to be protected.

The activation pattern optimizer 207 operates through a multi-stage evaluation process. In one embodiment, activation pattern optimizer 207 first generates a set of feasible activation patterns based on the geometric relationship between the end effector, target object, and surface features to be protected. For each candidate pattern, activation pattern optimizer 207 calculates a composite score incorporating multiple metrics. One metric may comprise the predicted pick success probability, determined through analysis of contact points, force vectors, and object stability. Another metric may comprise the risk score for surface feature interaction, calculated based on proximity measurements and historical damage probability data. The activation pattern optimizer 207 applies a selection algorithm to identify the activation pattern that satisfies a predetermined threshold for pick success while minimizing the risk score for surface feature interaction. Upon execution of a pick operation, activation pattern optimizer 207 receives outcome data indicating success or failure of the pick and any detected surface feature interactions. This outcome data is utilized to update internal ranking tables that associate activation patterns with performance metrics under various geometric configurations.

Alternative implementations of the activation pattern optimizer 207 may employ different optimization strategies. In one alternative embodiment, activation pattern optimizer 207 utilizes a machine learning model trained on historical pick operation data to predict optimal activation patterns directly from input parameters including end effector position, object geometry, and protected feature locations. Another alternative implementation employs a rule-based system where activation pattern optimizer 207 applies a hierarchical decision tree to select activation patterns based on predefined conditions and thresholds. In yet another alternative, activation pattern optimizer 207 may implement a genetic algorithm that evolves activation patterns over multiple generations, using fitness functions that encode both pick success and surface protection objectives. Some embodiments of activation pattern optimizer 207 may incorporate real-time sensor feedback during pick execution to dynamically adjust activation patterns, deactivating zones that approach features to be protected beyond acceptable tolerances. Additional alternatives include implementations where activation pattern optimizer 207 maintains separate optimization models for different object categories or surface feature types, or where activation pattern optimizer 207 employs reinforcement learning techniques to continuously improve pattern selection through trial outcomes.

### Computer Implemented Process

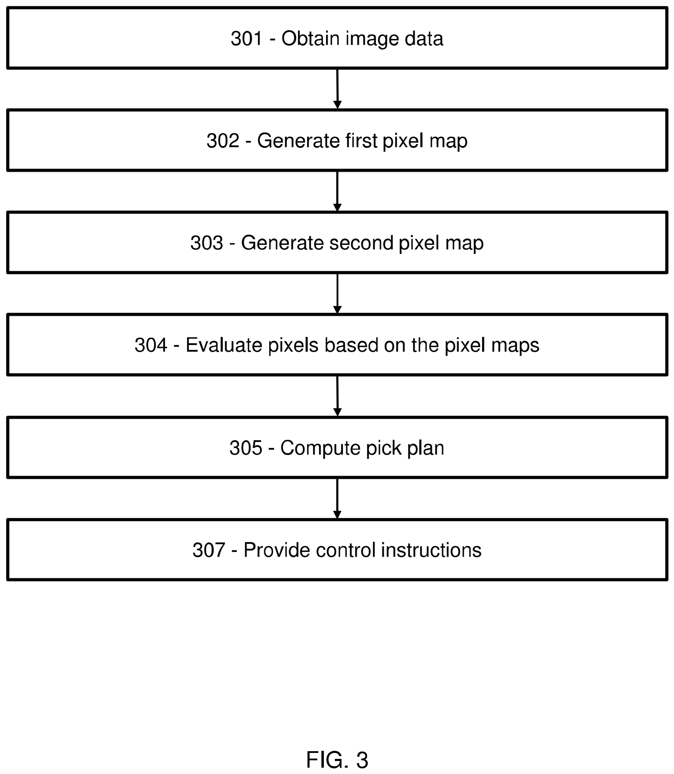

**FIG. 3** illustrates an exemplary computer-implemented process for surface feature protection during robotic picking operations according to an embodiment of the invention. The process computes optimized pick plans expected to achieve successful object picking while minimizing interaction with protected surface features through fuzzy obstacle evaluation and selective end effector activation. The process comprises the following steps: obtaining image data representing at least a portion of the pick area from the data acquisition system 301; generating a first pixel map comprising first labels associated with object surface regions acceptable for end effector contact 302; generating a second pixel map comprising second labels associated with protected surface features 303; evaluating pixels based on the pixel maps 304; computing a pick plan 305; determining end effector activation configuration 306; and outputting control instructions for the robotic picking unit 307. The process steps described herein may be performed in association with a system such as that described in FIG. 1 and/or FIG. 2 above or in association with a different system. The process may comprise additional steps, fewer steps, and/or a different order of steps without departing from the scope of the invention as would be apparent to one of ordinary skill in the art. In addition, different steps or features thereof may be combined into a single step or a single step may be separated into a plurality of steps without departing from the scope of the invention.

At 301, the processor obtains image data representing at least a portion of the pick area from the data acquisition system. The obtained image data encompasses visual and spatial information captured from the pick area, which comprises a designated region where objects are positioned for automated handling, manipulation, or selection operations.

At 301, the image data obtained by the processor provides a digital representation of the pick area's contents, enabling computational analysis of object presence, positioning, and characteristics. The image data comprises pixel arrays encoding visual information, where each pixel contains intensity values, color information, depth measurements, or combinations thereof. The processor receives this image data through established communication protocols from the data acquisition system, which may include direct memory access, network transmission, or shared memory architectures.

At 301, the processor implements data acquisition through multiple modalities. When obtaining two-dimensional image data, the processor receives pixel arrays containing color intensity values in various color spaces such as RGB, HSV, or grayscale formats. The two-dimensional data encodes visual appearance information including texture, color patterns, and object boundaries within the pick area. When obtaining three-dimensional image data, the processor receives depth maps, point clouds, or volumetric representations that encode spatial relationships and geometric properties of objects within the pick area. The three-dimensional data includes distance measurements from the sensor to various points on object surfaces, enabling determination of object shapes, sizes, and relative positions.

At 301, the data acquisition system comprises various imaging devices operating on different sensing principles. RGB-D cameras combine color image sensors with depth sensing capabilities, typically employing structured light projection, time-of-flight measurement, or stereo vision techniques to generate synchronized color and depth data. LiDAR sensors emit laser pulses and measure return times to construct precise three-dimensional point clouds of the pick area. Infrared cameras detect thermal radiation or operate in near-infrared wavelengths to capture images under varying lighting conditions or to identify specific material properties.

At 301, alternative implementations for obtaining image data include utilizing stereo camera pairs that compute depth through triangulation of corresponding features between left and right image views. Time-of-flight cameras that measure phase shifts in modulated light reflections provide another approach for capturing combined color and depth information. Structured light systems that project known patterns onto the pick area and analyze pattern deformations offer precise depth measurements. Photometric stereo techniques using multiple light sources from different angles can reconstruct surface normals and depth information from shading variations. Multi-spectral or hyperspectral imaging systems capture data across extended electromagnetic spectrum ranges, providing enhanced material discrimination capabilities. Ultrasonic sensor arrays generate spatial maps through acoustic pulse-echo measurements, particularly useful in environments with optical interference. Radar-based imaging systems employ radio frequency waves to penetrate obscurants and generate spatial representations of the pick area.

At 302, the processor processes the image data through the image processing module to generate a first pixel map comprising first labels associated with object surface regions that are acceptable for contact by the end effector. The image processing module receives the captured image data as input and produces a labeled pixel map as output, where each pixel or group of pixels in the map corresponds to a spatial location on the object's surface and carries a label indicating whether that location represents an acceptable contact region for the robotic end effector.

At 302, this processing operation analyzes the visual characteristics of different surface regions within the image data to distinguish between areas that can safely accommodate physical contact from the end effector and areas that should be avoided. The first pixel map serves as a spatial representation that maps the two-dimensional image coordinates to corresponding surface regions on the three-dimensional object, with the first labels providing a binary or multi-class classification of each region's suitability for end effector contact. These acceptable contact regions typically correspond to robust surface areas that can withstand the mechanical forces applied during grasping, suction, or other manipulation operations without sustaining damage or compromising the object's integrity.

At 302, the image processing module implements computer vision algorithms to perform the surface region classification. The module may employ convolutional neural networks trained on labeled datasets of object images to recognize and segment different surface features. The neural network processes the input image through multiple convolutional layers that extract hierarchical features, followed by upsampling or deconvolution layers that generate pixel-wise predictions. Alternatively, the module may utilize traditional computer vision techniques such as edge detection, texture analysis, and color segmentation to identify distinct surface regions, followed by rule-based classification to determine contact acceptability. The module may also implement segmentation architectures that assign class labels to each pixel based on learned representations of acceptable and unacceptable contact surfaces. The processing may incorporate depth information when available, using RGB-D data to enhance the accuracy of surface region identification through geometric feature analysis.

At 302, alternative implementations of the image processing module may include transformer-based vision models that process image patches to generate attention maps highlighting acceptable contact regions. The module may alternatively employ instance segmentation techniques that first detect individual objects or object parts, then classify the surfaces of each detected instance. Another alternative involves using generative models trained to produce synthetic pixel maps based on the input images, where the generated maps encode the contact acceptability information. The image processing module may also implement a multi-stage pipeline where initial processing performs object detection and localization, followed by focused analysis of the detected object regions to generate the first pixel map. Additionally, the module may utilize graph neural networks that represent the image as a graph structure, with nodes corresponding to image regions and edges encoding spatial relationships, to propagate contact acceptability labels across connected regions.

At 303, the processor generates a second pixel map comprising second labels associated with surface features on objects that are to be protected, such as shipping labels, perforations, holes, seams, or packaging labels. The second pixel map comprises at least a subset of pixels of the first pixel map, thereby generating a secondary pixel classification for each pixel in the subset that indicates both object membership and protected feature status.

At 303, the processor analyzes the first pixel map to identify and classify specific surface features that require protection during subsequent processing operations. The processor applies feature detection algorithms to locate and delineate surface features including adhesive shipping labels affixed to object surfaces, perforations formed through packaging materials, holes or openings in object structures, seams where materials join or overlap, and packaging labels containing product information or regulatory markings. The processor generates pixel-level classifications that distinguish these features to be protected from other surface regions of the objects.

At 303, the processor may implement the second pixel map generation through multiple computational techniques. The processor may apply edge detection algorithms to identify boundaries and transitions that characterize features to be protected, utilizing gradient-based methods to detect sharp intensity changes indicative of label edges or perforation boundaries. The processor may employ template matching algorithms to recognize standardized features such as shipping label formats or packaging label configurations. The processor may utilize texture analysis algorithms to distinguish surface features based on local pixel patterns, identifying the smooth surfaces of labels versus the textured surfaces of packaging materials. The processor may implement connected component analysis to group adjacent pixels belonging to the same protected feature, ensuring complete feature delineation. The second pixel map maintains spatial correspondence with the first pixel map, where each pixel location in the second map corresponds to the same spatial location in the first map. The processor may assign binary or multi-class labels to pixels, where protected feature pixels receive distinct label values differentiating them from non-protected regions.

At 303, alternative implementations for generating the second pixel map include machine learning-based approaches where the processor employs trained convolutional neural networks to perform segmentation of features to be protected. The processor can utilize region-based convolutional neural networks (R-CNN) or mask R-CNN architectures to simultaneously detect and segment features to be protected within the pixel data. Another alternative involves the processor implementing watershed segmentation algorithms to delineate features to be protected based on topographical interpretations of pixel intensities. The processor can alternatively employ active contour models or level set methods to iteratively refine feature boundaries based on energy minimization principles. In another alternative, the processor implements graph-based segmentation approaches where pixels are treated as nodes and edges represent similarity relationships, with graph cuts determining optimal feature boundaries. The processor can alternatively utilize spectral analysis methods where frequency domain characteristics distinguish features to be protected from surrounding regions. Another alternative involves the processor implementing morphological operations including erosion, dilation, opening, and closing operations to refine feature boundaries and remove noise artifacts from the second pixel map. Although depicted and discussed as separate steps, steps 302 and 303 may be combined into a single step where both the first and second pixel maps are generated together through a single image processing step which identifies both pickable surfaces of objects as well as surface features to be avoided.

At 304, the process comprises evaluating pixels based on the pixel maps. The process may comprise treating pixels associated with the second label as fuzzy obstacles by evaluating the pixels in association with a tunable penalty cost rather than treating the pixels as hard collision constraints. The penalty cost may vary with geometric characteristics of the fuzzy obstacle such that higher penalties are applied to edge pixels of surface features and lower penalties are applied to more central pixels.

At 304, the processor implements a soft constraint approach for handling obstacles in the navigation or pick planning system. Unlike traditional binary obstacle representations where pixels are classified as either traversable or non-traversable, the processor at 304 assigns variable penalty costs to pixels labeled with the second label. This approach enables more nuanced pick decisions by allowing end effector positioning over regions that would otherwise be completely blocked in a hard constraint system.

At 304, the processor operates by first identifying pixels that have been assigned the second label through a segmentation or classification process. For each identified pixel, the processor calculates a penalty cost value based on the pixel's geometric relationship to the fuzzy obstacle structure. The processor determines whether a pixel represents an edge region by analyzing neighboring pixel labels and computing gradient magnitudes or using edge detection operators. Edge pixels receive higher penalty values, reflecting their proximity to obstacle boundaries where navigation risk is elevated. Central pixels, identified through distance transform calculations or morphological operations for example, receive lower penalty values. The processor incorporates these penalty costs into the pick planning cost function, where the total pick cost includes both traditional distance metrics and the accumulated penalty costs from traversing fuzzy obstacle regions. During pick optimization, the processor evaluates multiple candidate picks and selects routes that minimize the combined cost, potentially allowing picks through or over fuzzy obstacles when the penalty cost is outweighed by other factors such as travel distance savings, pick success likelihood, etc..

Alternative implementations at 304 may employ different penalty assignment strategies. The processor may utilize a continuous distance-based penalty function where costs decrease exponentially or linearly from obstacle boundaries toward centers. Another alternative involves the processor implementing a probabilistic framework where penalty costs represent collision probabilities derived from sensor uncertainty models or historical traversability data. The processor may alternatively employ a multi-resolution approach, computing penalty costs at different spatial scales and combining them through weighted averaging. In some embodiments, the processor at 304 may utilize machine learning models trained on traversability data to predict appropriate penalty costs based on local image features or terrain characteristics. The processor may also implement an adaptive penalty system where costs are dynamically adjusted based on vehicle dynamics, environmental conditions, or mission priorities. Additionally, the processor may employ a hybrid approach combining geometric-based penalties with semantic information, where different types of fuzzy obstacles receive different baseline penalty scales before geometric modulation is applied.

At 305, the processor computes, in a single optimization, a pick plan that jointly specifies: a selection of an object of the plurality of objects to be picked, a pose for the end effector of the robotic picking unit relative to the selected object, and an activation configuration for the plurality of independently controllable portions of the end effector. The optimization maximizes an objective function combining pick success terms and surface feature protection terms.

At 305, the processor generates a comprehensive pick plan through a unified optimization process that simultaneously determines multiple interrelated parameters for robotic object manipulation. The pick plan encompasses three primary components: identification of a target object from among multiple available objects, determination of the spatial relationship between the robotic end effector and the target object, and specification of control states for individual actuatable segments of the end effector. This integrated approach enables coordinated decision-making across traditionally separate planning domains.

At 305, the optimization process operates by formulating a composite objective function that incorporates both pick success terms and surface feature protection terms. The pick success terms quantify the likelihood of successfully grasping and manipulating the selected object based on factors such as object geometry, material properties, weight distribution, and accessibility. The surface feature protection terms quantify the risk of damage to delicate surface features, textures, or coatings on the object during the picking operation. The processor evaluates candidate combinations of object selection, end effector pose, and activation configurations against this objective function. The optimization may employ gradient-based methods, evolutionary algorithms, or constraint satisfaction techniques to search the solution space. The processor iteratively adjusts the decision variables to maximize the objective function value, balancing the competing goals of reliable object acquisition and preservation of object surface integrity. The activation configuration for the independently controllable portions determines which segments of the end effector are engaged, at what force levels, and in what sequence, enabling adaptive gripping strategies tailored to each object's characteristics.

At 305, alternative implementations of the optimization process include multi-stage optimization approaches where object selection is performed first, followed by sequential optimization of pose and activation configuration. Another alternative employs machine learning models trained on historical picking data to directly predict optimal pick plans without explicit optimization. The processor may alternatively utilize a library of pre-computed pick plans indexed by object characteristics and select the most appropriate plan through similarity matching. In some embodiments, the optimization may be formulated as a mixed-integer programming problem where discrete variables represent object selection and activation states while continuous variables represent pose parameters. The objective function may alternatively be structured as a multi-objective optimization problem using Pareto optimization techniques to generate a set of non-dominated solutions. Some implementations may employ reinforcement learning agents that learn optimal picking strategies through trial and error in simulation or controlled environments. The processor may also implement a hierarchical optimization scheme where coarse-grained decisions are made at higher levels and refined at lower levels of the hierarchy.

At 305, determining an activation configuration may comprise decreased activation of at least one of the independently controllable portions of the end effector whose contact region would overlap pixels associated with the second label. The activation configuration represents a control scheme that modulates the operational parameters of individual controllable portions of the end effector based on the spatial correspondence between the end effector's contact regions and the labeled pixels in the processed image data.

To determine the activation configuration, the processor may analyze the spatial relationship between the projected contact regions of the independently controllable portions and the pixels bearing the second label to generate the activation configuration. The activation configuration specifies operational parameters for each independently controllable portion of the end effector, wherein portions whose contact regions coincide with second-labeled pixels are designated for decreased activation. The decreased activation encompasses a range of operational states from complete deactivation, where the controllable portion applies zero force or suction, to partial reduction where the controllable portion operates at a diminished capacity relative to portions contacting non-protected regions.

The processor may execute the activation configuration determination through computational analysis of the overlay between the end effector's contact map and the labeled pixel map. The processor iterates through each independently controllable portion, evaluating whether its corresponding contact region intersects with pixels assigned the second label. For each controllable portion where such intersection occurs, the processor assigns a decreased activation parameter within the activation configuration. The decreased activation parameter may be represented as a scalar value between 0 and 1, where 0 indicates complete deactivation and values between 0 and 1 indicate proportional reduction in activation intensity. For controllable portions whose contact regions do not overlap with second-labeled pixels, the processor assigns standard or full activation parameters.

Alternative implementations for determining the activation configuration include gradient-based activation reduction where the processor calculates a gradual decrease in activation intensity based on proximity to second-labeled pixels, creating a buffer zone around features to be protected. Another alternative involves binary threshold determination where the processor applies a predetermined overlap threshold, deactivating controllable portions only when the overlap with second-labeled pixels exceeds a specified percentage of the contact region area. The processor may alternatively employ probabilistic activation determination, calculating activation levels based on confidence values associated with the second label classification, whereby lower confidence results in less aggressive deactivation. Additionally, the processor may implement temporal activation modulation, where the decreased activation is applied as a time-varying function, allowing for dynamic adjustment during the manipulation operation.

At 307, the processor outputs control instructions for the robotic picking unit based on the computed pick plan. The control instructions comprise at least one of pick coordinates, robot pose, end effector pose, and end effector activation instructions. The control instructions are determined such that they are expected to achieve a successful pick of the selected object while reducing interaction with the surface features to be protected associated with the second label.

At 307, the processor generates and transmits a set of control instructions that enable the robotic picking unit to execute the previously computed pick plan. These control instructions serve as the interface between the computational planning phase and the physical execution phase of the robotic picking operation. The control instructions translate the abstract pick plan into concrete, executable commands that the robotic picking unit can interpret and implement to manipulate the selected object while reducing, avoiding or minimizing contact with surface features to be protected.

At 307, the processor analyzes the computed pick plan and generates corresponding control instructions through a multi-stage translation process. The processor first extracts the target pick coordinates from the pick plan, which specify the three-dimensional spatial location where the end effector should engage with the selected object. The processor then computes the robot pose, which defines the configuration of the robotic arm's joints and links required to position the end effector at the specified pick coordinates. The processor determines the end effector pose, which specifies the orientation and alignment of the end effector relative to the object's surface and the features to be protected identified by the second label. The processor generates end effector activation instructions that control the timing and parameters for engaging the gripping or manipulation mechanism, such as vacuum pressure levels for suction grippers, closing force for mechanical grippers, or magnetic field strength for electromagnetic grippers. The processor optimizes these control instructions by incorporating constraints derived from the surface features to be protected, adjusting trajectories and approach angles to maintain clearance from sensitive areas while ensuring reliable object acquisition.

At 307, the processor may alternatively generate control instructions using inverse kinematics algorithms that compute joint angles directly from the desired end effector position and orientation. The processor may employ trajectory planning algorithms that generate time-parameterized paths for smooth motion execution while avoiding features to be protected. The processor may utilize force-based control strategies that specify desired contact forces rather than positions, enabling compliant interaction with the object while protecting sensitive surfaces. The processor may implement impedance control schemes that modulate the apparent stiffness of the robotic system during interaction with the object. The processor may generate control instructions using model predictive control techniques that optimize future robot states over a prediction horizon while respecting constraints imposed by the features to be protected. The processor may employ sensor-based reactive control strategies that modify the control instructions in real-time based on feedback from force, tactile, or proximity sensors to ensure protection of the labeled surface features during pick execution.

### Hardware Architecture

Generally, the techniques disclosed herein may be implemented on hardware or a combination of software and hardware. For example, they may be implemented in an operating system kernel, in a separate user process, in a library package bound into network applications, on a specially constructed machine, on an application-specific integrated circuit (ASIC), or on a network interface card.

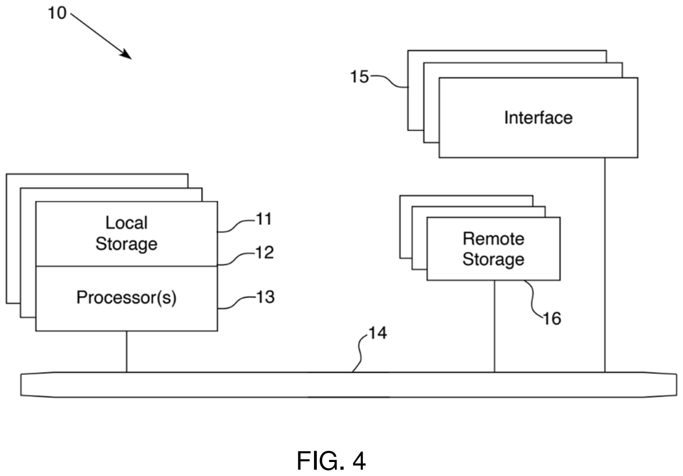

Software/hardware hybrid implementations of at least some of the embodiments disclosed herein may be implemented on a programmable network-resident machine (which should be understood to include intermittently connected network-aware machines) selectively activated or reconfigured by a computer program stored in memory. Such network devices may have multiple network interfaces that may be configured or designed to utilize different types of network communication protocols. A general architecture for some of these machines may be described herein in order to illustrate one or more exemplary means by which a given unit of functionality may be implemented. According to specific embodiments, at least some of the features or functionalities of the various embodiments disclosed herein may be implemented on one or more general-purpose computers associated with one or more networks, such as for example an end-user computer system, a client computer, a network server or other server system, a mobile computing device (e.g., tablet computing device, mobile phone, smartphone, laptop, or other appropriate computing device), a consumer electronic device, a music player, or any other suitable electronic device, router, switch, or other suitable device, or any combination thereof. In at least some embodiments, at least some of the features or functionalities of the various embodiments disclosed herein may be implemented in one or more virtualized computing environments (e.g., network computing clouds, virtual machines hosted on one or more physical computing machines, or other appropriate virtual environments). Any of the above mentioned systems, units, modules, engines, controllers, components, process steps or the like may be and/or comprise hardware and/or software as described herein. For example, the systems, engines, and subcomponents described herein may be and/or comprise computing hardware and/or software as described herein in association with FIGS. 4-7. Furthermore, any of the above mentioned systems, units, modules, engines, controllers, components, interfaces or the like may use and/or comprise an application programming interface (API) for communicating with other systems units, modules, engines, controllers, components, interfaces or the like for obtaining and/or providing data or information.

Referring now to **FIG. 4**, there is shown a block diagram depicting an exemplary computing device **10** suitable for implementing at least a portion of the features or functionalities disclosed herein. Computing device **10** may be, for example, any one of the computing machines listed in the previous paragraph, or indeed any other electronic device capable of executing software- or hardware-based instructions according to one or more programs stored in memory. Computing device **10** may be configured to communicate with a plurality of other computing devices, such as clients or servers, over communications networks such as a wide area network a metropolitan area network, a local area network, a wireless network, the Internet, or any other network, using known protocols for such communication, whether wireless or wired.

In one aspect, computing device **10** includes one or more central processing units (CPU) **12**, one or more interfaces **15**, and one or more busses **14** (such as a peripheral component interconnect (PCI) bus). When acting under the control of appropriate software or firmware, CPU **12** may be responsible for implementing specific functions associated with the functions of a specifically configured computing device or machine. For example, in at least one aspect, a computing device **10** may be configured or designed to function as a server system utilizing CPU **12**, local memory **11** and/or remote memory **16**, and interface(s) **15**. In at least one aspect, CPU **12** may be caused to perform one or more of the different types of functions and/or operations under the control of software modules or components, which for example, may include an operating system and any appropriate applications software, drivers, and the like.

CPU **12** may include one or more processors **13** such as, for example, a processor from one of the Intel, ARM, Qualcomm, and AMD families of microprocessors. In some embodiments, processors **13** may include specially designed hardware such as application-specific integrated circuits (ASICs), electrically erasable programmable read-only memories (EEPROMs), field-programmable gate arrays (FPGAs), and so forth, for controlling operations of computing device **10**. In a particular aspect, a local memory **11** (such as non-volatile random-access memory (RAM) and/or read-only memory (ROM), including for example one or more levels of cached memory) may also form part of CPU **12**. However, there are many different ways in which memory may be coupled to system **10**. Memory **11** may be used for a variety of purposes such as, for example, caching and/or storing data, programming instructions, and the like. It should be further appreciated that CPU **12** may be one of a variety of system-on-a-chip (SOC) type hardware that may include additional hardware such as memory or graphics processing chips, such as a QUALCOMM SNAPDRAGON^{™} or SAMSUNG EXYNOS^{™} CPU as are becoming increasingly common in the art, such as for use in mobile devices or integrated devices.

As used herein, the term "processor" is not limited merely to those integrated circuits referred to in the art as a processor, a mobile processor, or a microprocessor, but broadly refers to a microcontroller, a microcomputer, a programmable logic controller, an application-specific integrated circuit, and any other programmable circuit.

In one aspect, interfaces **15** are provided as network interface cards (NICs). Generally, NICs control the sending and receiving of data packets over a computer network; other types of interfaces **15** may for example support other peripherals used with computing device **10**. Among the interfaces that may be provided are Ethernet interfaces, frame relay interfaces, cable interfaces, DSL interfaces, token ring interfaces, graphics interfaces, and the like. In addition, various types of interfaces may be provided such as, for example, universal serial bus (USB), Serial, Ethernet, FIREWIRE^{™}, THUNDERBOLT^{™}, PCI, parallel, radio frequency (RF), BLUETOOTH^{™}, near-field communications (e.g., using near-field magnetics), 802.11 (WiFi), frame relay, TCP/IP, ISDN, fast Ethernet interfaces, Gigabit Ethernet interfaces, Serial ATA (SATA) or external SATA (ESATA) interfaces, high-definition multimedia interface (HDMI), digital visual interface (DVI), analog or digital audio interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces **15** may include physical ports appropriate for communication with appropriate media. In some cases, they may also include an independent processor (such as a dedicated audio or video processor, as is common in the art for high-fidelity A/V hardware interfaces) and, in some instances, volatile and/or non-volatile memory (e.g., RAM).

Although the system shown in **FIG. 4** illustrates one specific architecture for a computing device **10** for implementing one or more of the embodiments described herein, it is by no means the only device architecture on which at least a portion of the features and techniques described herein may be implemented. For example, architectures having one or any number of processors **13** may be used, and such processors **13** may be present in a single device or distributed among any number of devices. In one aspect, single processor **13** handles communications as well as routing computations, while in other embodiments a separate dedicated communications processor may be provided. In various embodiments, different types of features or functionalities may be implemented in a system according to the aspect that includes a client device (such as a tablet device or smartphone running client software) and server systems (such as a server system described in more detail below).

Regardless of network device configuration, the system of an aspect may employ one or more memories or memory modules (such as, for example, remote memory block **16** and local memory **11**) configured to store data, program instructions for the general-purpose network operations, or other information relating to the functionality of the embodiments described herein (or any combinations of the above). Program instructions may control execution of or comprise an operating system and/or one or more applications, for example. Memory **16** or memories **11**, **16** may also be configured to store data structures, configuration data, encryption data, historical system operations information, or any other specific or generic non-program information described herein.

Because such information and program instructions may be employed to implement one or more systems or methods described herein, at least some network device embodiments may include nontransitory machine-readable storage media, which, for example, may be configured or designed to store program instructions, state information, and the like for performing various operations described herein. Examples of such nontransitory machine- readable storage media include, but are not limited to, magnetic media such as hard disks, floppy disks, and magnetic tape; optical media such as CD-ROM disks; magneto-optical media such as optical disks, and hardware devices that are specially configured to store and perform program instructions, such as read-only memory devices (ROM), flash memory (as is common in mobile devices and integrated systems), solid state drives (SSD) and "hybrid SSD" storage drives that may combine physical components of solid state and hard disk drives in a single hardware device (as are becoming increasingly common in the art with regard to personal computers), memristor memory, random access memory (RAM), and the like. It should be appreciated that such storage means may be integral and non-removable (such as RAM hardware modules that may be soldered onto a motherboard or otherwise integrated into an electronic device), or they may be removable such as swappable flash memory modules (such as "thumb drives" or other removable media designed for rapidly exchanging physical storage devices), "hot-swappable" hard disk drives or solid state drives, removable optical storage discs, or other such removable media, and that such integral and removable storage media may be utilized interchangeably. Examples of program instructions include both object code, such as may be produced by a compiler, machine code, such as may be produced by an assembler or a linker, byte code, such as may be generated by for example a JAVA^{™} compiler and may be executed using a Java virtual machine or equivalent, or files containing higher level code that may be executed by the computer using an interpreter (for example, scripts written in Python, Perl, Ruby, Groovy, or any other scripting language).

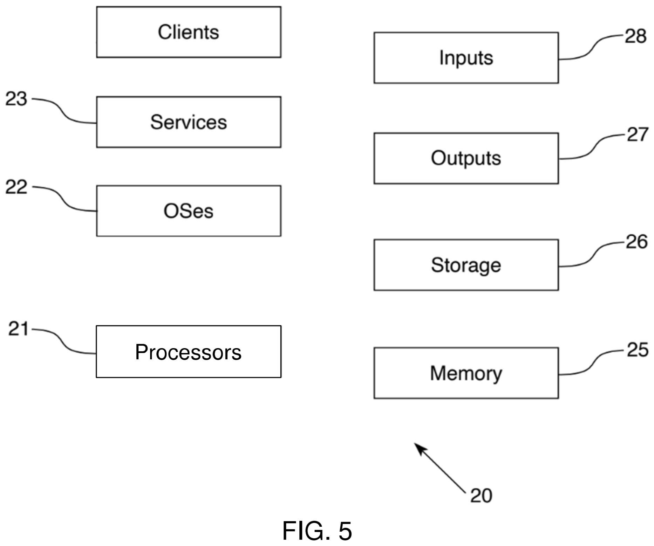

In some embodiments, systems may be implemented on a standalone computing system. Referring now to **FIG. 5**, there is shown a block diagram depicting a typical exemplary architecture of one or more embodiments or components thereof on a standalone computing system. Computing device **20** includes processors **21** that may run software that carry out one or more functions or applications of embodiments, such as for example a client application. Processors **21** may carry out computing instructions under control of an operating system **22** such as, for example, a version of MICROSOFT WINDOWS^{™} operating system, APPLE macOS^{™} or iOS^{™} operating systems, some variety of the Linux operating system, ANDROID^{™} operating system, or the like. In many cases, one or more shared services **23** may be operable in system **20**, and may be useful for providing common services to client applications. Services **23** may for example be WINDOWS^{™} services, user-space common services in a Linux environment, or any other type of common service architecture used with operating system **21**. Input devices **28** may be of any type suitable for receiving user input, including for example a keyboard, touchscreen, microphone (for example, for voice input), mouse, touchpad, trackball, or any combination thereof. Output devices **27** may be of any type suitable for providing output to one or more users, whether remote or local to system **20**, and may include for example one or more screens for visual output, speakers, printers, or any combination thereof. Memory **25** may be random-access memory having any structure and architecture known in the art, for use by processors **21**, for example to run software. Storage devices **26** may be any magnetic, optical, mechanical, memristor, or electrical storage device for storage of data in digital form (such as those described above, referring to **FIG. 4**). Examples of storage devices **26** include flash memory, magnetic hard drive, CD-ROM, and/or the like.

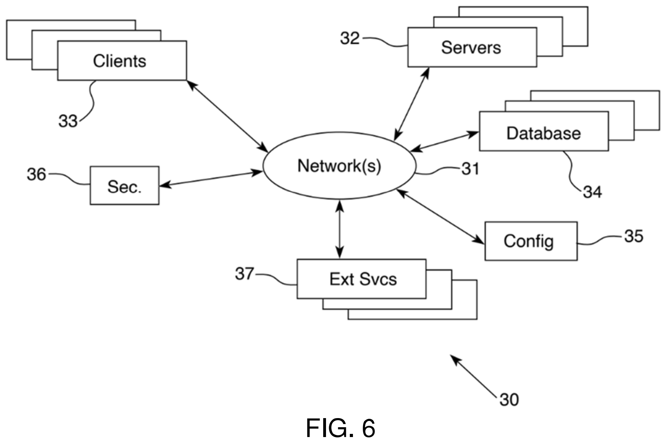

In some embodiments, systems may be implemented on a distributed computing network, such as one having any number of clients and/or servers. Referring now to **FIG. 6**, there is shown a block diagram depicting an exemplary architecture **30** for implementing at least a portion of a system according to one aspect on a distributed computing network. According to the aspect, any number of clients **33** may be provided. Each client **33** may run software for implementing client-side portions of a system; clients may comprise a system **20** such as that illustrated in **FIG. 5**. In addition, any number of servers **32** may be provided for handling requests received from one or more clients **33**. Clients **33** and servers **32** may communicate with one another via one or more electronic networks **31**, which may be in various embodiments any of the Internet, a wide area network, a mobile telephony network (such as CDMA or GSM cellular networks), a wireless network (such as WiFi, WiMAX, LTE, and so forth), or a local area network (or indeed any network topology known in the art; the aspect does not prefer any one network topology over any other). Networks **31** may be implemented using any known network protocols, including for example wired and/or wireless protocols.

In addition, in some embodiments, servers **32** may call external services **37** when needed to obtain additional information, or to refer to additional data concerning a particular call. Communications with external services **37** may take place, for example, via one or more networks **31**. In various embodiments, external services **37** may comprise web-enabled services or functionality related to or installed on the hardware device itself. For example, in one aspect where client applications are implemented on a smartphone or other electronic device, client applications may obtain information stored in a server system **32** in the cloud or on an external service **37** deployed on one or more of a particular enterprise's or user's premises.

In some embodiments, clients **33** or servers **32** (or both) may make use of one or more specialized services or appliances that may be deployed locally or remotely across one or more networks **31**. For example, one or more databases **34** may be used or referred to by one or more embodiments. It should be understood by one having ordinary skill in the art that databases **34** may be arranged in a wide variety of architectures and using a wide variety of data access and manipulation means. For example, in various embodiments one or more databases **34** may comprise a relational database system using a structured query language (SQL), while others may comprise an alternative data storage technology such as those referred to in the art as "NoSQL" (for example, HADOOP CASSANDRA^{™}, GOOGLE BIGTABLE^{™}, and so forth). In some embodiments, variant database architectures such as column-oriented databases, in-memory databases, clustered databases, distributed databases, or even flat file data repositories may be used according to the aspect. It will be appreciated by one having ordinary skill in the art that any combination of known or future database technologies may be used as appropriate, unless a specific database technology or a specific arrangement of components is specified for a particular aspect described herein. Moreover, it should be appreciated that the term "database" as used herein may refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, some embodiments may make use of one or more security systems **36** and configuration systems **35**. Security and configuration management are common information technology (IT) and web functions, and some amount of each are generally associated with any IT or web systems. It should be understood by one having ordinary skill in the art that any configuration or security subsystems known in the art now or in the future may be used in conjunction with embodiments without limitation, unless a specific security **36** or configuration system **35** or approach is specifically required by the description of any specific aspect.

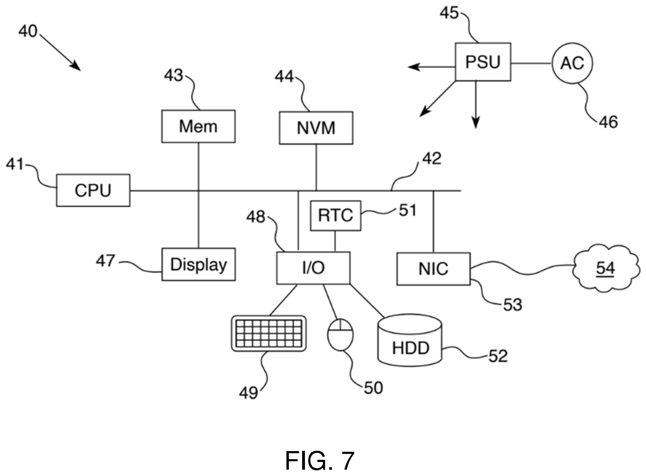

**FIG. 7** shows an exemplary overview of a computer system **40** as may be used in any of the various locations throughout the system. It is exemplary of any computer that may execute code to process data. Various modifications and changes may be made to computer system **40** without departing from the broader scope of the system and method disclosed herein. Central processor unit (CPU) **41** is connected to bus **42**, to which bus is also connected memory **43**, nonvolatile memory **44**, display **47**, input/output (I/O) unit **48**, and network interface card (NIC) **53**. I/O unit **48** may, typically, be connected to keyboard **49**, pointing device **50**, hard disk **52**, and real-time clock **51**. NIC **53** connects to network **54**, which may be the Internet or a local network, which local network may or may not have connections to the Internet. Also shown as part of system **40** is power supply unit **45** connected, in this example, to a main alternating current (AC) supply **46**. Not shown are batteries that could be present, and many other devices and modifications that are well known but are not applicable to the specific novel functions of the current system and method disclosed herein. It should be appreciated that some or all components illustrated may be combined, such as in various integrated applications, for example Qualcomm or Samsung system-on-a-chip (SOC) devices, or whenever it may be appropriate to combine multiple capabilities or functions into a single hardware device (for instance, in mobile devices such as smartphones, video game consoles, in-vehicle computer systems such as navigation or multimedia systems in automobiles, or other integrated hardware devices).

In various embodiments, functionality for implementing systems or methods of various embodiments may be distributed among any number of client and/or server components. For example, various software modules may be implemented for performing various functions in connection with the system of any particular aspect, and such modules may be variously implemented to run on server and/or client components.

The skilled person will be aware of a range of possible modifications of the various embodiments described above. Accordingly, the present invention is defined by the claims and their equivalents.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A robotic picking system comprising:
a data acquisition system comprising at least one imaging sensor configured to capture image data of a pick area containing a plurality of objects;
an image processing module configured to:
receive the captured image data from the data acquisition system,
generate a first pixel map by applying first classification operations to identify object surface regions suitable for robotic contact,
generate a second pixel map by applying second classification operations to identify surface features on the objects, wherein the identified surface features comprise features to be protected, wherein the second pixel map comprises at least a subset of pixels from the first pixel map;
a pick planning processor configured to:
receive the pixel maps as input;
assign variable penalty costs to pixels identified as surface features to be protected, wherein the penalty costs vary based on geometric position within each identified surface feature to be protected,
execute a unified optimization algorithm that simultaneously computes:
a target object selection from the plurality of objects,
a three-dimensional pose for positioning a robotic end effector of a robotic picking unit relative to the selected target object, and
an activation configuration for a plurality of independently controllable portions of the robotic end effector,
wherein the unified optimization algorithm maximizes an objective function that combines pick success probability with reduction of contact or interaction with surface features to be protected;
a control interface configured to transmit the target object selection, the three-dimensional pose, and the computed activation configuration to a control unit associated with the robotic picking unit wherein the activation configuration selectively deactivates or reduces portions of the robotic end effector that would contact surface features to be protected during the pick operation.

2. The system of claim 1, wherein the image processing module comprises:
a first neural network accelerator configured to execute a trained convolutional neural network for object surface segmentation; and
a second neural network accelerator configured to execute a trained convolutional neural network for surface feature detection.

3. The system of claim 1, wherein the pick planning processor is further configured to:
compute a contact probability map indicating likelihood of end effector contact for each pixel based on the three-dimensional pose; and
weight the penalty costs by the contact probability map when executing the unified optimization algorithm.

4. The system of claim 1, wherein the penalty costs assigned to surface features to be protected comprise:
higher penalty values for edge pixels of surface features to be protected; and
lower penalty values for central pixels of surface features to be protected.

5. The system of claim 1, wherein the data acquisition system comprises:
at least one RGB-D camera configured to capture both color image data and depth data; and
a structured light projector synchronized with the RGB-D camera to enhance depth data quality.

6. The system of claim 1, wherein the unified optimization algorithm comprises:
a gradient-based optimizer configured to iteratively adjust the target object selection,
three-dimensional pose, and activation configuration based on gradients of the objective function.

7. The system of claim 1, wherein the control interface is further configured to:
generate time-synchronized control signals for the robotic arm motion and the end effector activation; and
coordinate the selective deactivation of end effector portions with the approach trajectory of the end effector.

8. A computer-implemented method for robotic picking with surface feature protection, the method comprising:
capturing, by at least one imaging sensor, image data of a pick area containing a plurality of objects;
processing, by an image processing module, the captured image data to generate:
a first pixel map identifying object surface regions suitable for robotic contact, and
a second pixel map identifying surface features to be protected on the objects;
executing, by a pick planning processor, a unified optimization algorithm that:
assigns variable penalty costs to pixels identified as surface features to be protected,
simultaneously computes a target object selection, a three-dimensional end effector pose, and an activation configuration for a plurality of independently controllable end effector portions, and
maximizes an objective function combining pick success probability with reduction of contact with surface features to be protected;
transmitting control signals to a robotic picking unit wherein the control signals are operable to:
position a multi-axis robotic arm according to the computed three-dimensional pose, and
selectively control portions of the end effector according to the computed activation configuration, wherein end effector portions aligned with surface features to be protected are deactivated or operated at a reduced activation level.

9. The method of claim 8, wherein processing the captured image data comprises:
executing a first trained convolutional neural network on a first neural network accelerator to generate the first pixel map; and
executing a second trained convolutional neural network on a second neural network accelerator to generate the second pixel map.

10. The method of claim 8, wherein executing the unified optimization algorithm further comprises:
computing a contact probability map based on the three-dimensional pose and end effector geometry;
weighting the penalty costs by the contact probability values; and
iteratively adjusting the target object selection, three-dimensional pose, and activation configuration using gradient-based optimization.

11. The method of claim 8, wherein the variable penalty costs comprise:
edge-weighted penalties that assign higher costs to boundary pixels of surface features to be protected; and
distance-weighted penalties that decrease with distance from protected surface feature boundaries.

12. The method of claim 8, further comprising:
synchronizing the selective control of end effector portions with motion control of the robotic arm; and
initiating reduced end effector activation in specific portions prior to contact with corresponding surface features to be protected.

13. A non-transitory computer-readable storage medium storing instructions that, when executed by specialized image processing and optimization hardware, cause the hardware to perform operations comprising:
receiving image data from at least one imaging sensor monitoring a pick area;
generating, using neural network circuitry, a first pixel map identifying graspable surface regions and a second pixel map identifying surface features to be protected;
executing a unified optimization that:
treats surface features to be protected as fuzzy obstacles with tunable penalty costs,
jointly optimizes object selection, end effector positioning, and selective end effector portion activation,
computes an activation pattern that reduces contact or interaction over surface features to be protected; and
outputting time-synchronized control signals for robotic arm motion and end effector control to execute the optimized pick operation.

14. The storage medium of claim 13, wherein the operations further comprise:
computing geometric features of protected surface regions including edge proximity and region centrality; and
modulating the penalty costs based on the computed geometric features.

15. The storage medium of claim 13, wherein the unified optimization comprises:
constructing a differentiable objective function incorporating pick success metrics and surface protection metrics; and
applying gradient-based optimization to simultaneously solve for all pick parameters in a single computational pass.
